Europäisches Patentamt

European Patent Office

Office européen des brevets

(11) Publication number: **0 545 226 A2**

## EUROPEAN PATENT APPLICATION

(21) Application number: **92119985.7**

(22) Date of filing: **24.11.92**

(51) Int. Cl.5: **H04M 3/50**

(30) Priority: **03.12.91 US 802082**

(43) Date of publication of application:
**09.06.93 Bulletin 93/23**

(84) Designated Contracting States:
**DE FR GB**

(71) Applicant: **ROLM COMPANY**
**4900 Old Ironside Drive P.O. Box 58075**
**Santa Clara, CA 95052(US)**

(72) Inventor: **Holve, Timothy A.**
**997 Connie Drive**
**Campbell, CA 95008(US)**
Inventor: **Blohm, Jeffrey M.**
**1271 Vicente Nr. 167**
**Sunnyvale, CA 94086(US)**

(74) Representative: **Fuchs, Franz-Josef, Dr.-Ing.**
**Postfach 22 13 17**
**W-8000 München 22 (DE)**

(54) **Simultaneous recorded voice delivery and computer data screen delivery to an agent station.**

(57) Method and apparatus for processing a telephone call. A method includes the steps of, responsive to an established telephone call with a party, (a) receiving information over a phone trunk that is descriptive of a service request; (b) prompting the party to record a voice message or series of voice messages associated with the service request; (c) recording the voice message; (c) determining, from the received information, an identification of a call processing resource, such as an agent, for processing the service request; (d) delivering the recorded voice message to the call processing resource; and (e) providing the determined display screen to a display terminal associated with the call processing resource. The step of receiving receives ANI, DNIS, mailbox information, and/or DTMF information, and the step of determining includes the steps of translating the information into a service request, and transmitting the service request to a Host data processing system. The Host data processing system may cause a redirection of the recorded voice message and display screen to a call processing resource other than an originally selected resource.

FIG. 1A

FIELD OF THE INVENTION:

This invention relates generally to telecommunication method and apparatus and, in particular, to method and apparatus for associating a recorded voice message with specific computer data base information and for delivering the recorded voice message and data base information to a telephone and to an associated display screen.

BACKGROUND OF THE INVENTION:

In U.S. Patent No. 4,805,209, issued February 14, 1989 to W.T. Baker, Jr. et al. (Baker), entitled "Coordinated Transfer of Voice and Information Through a Digital Switch", there is described the use of a Computerized Branch Exchange (CBX) and a Host computer for transferring an incoming call, and associated data terminal information, to any available agent phone extension having a data terminal. A Call Management Control System (CMCS) is disclosed having data structures for linking phone extensions to particular display terminals associated with a host computer. Communication managers are described for facilitating the transfer of messages between the CBX and the Host.

The system of Baker is very well suited for coordinating a "live" call with display terminal information and for transferring this combination from one Automatic Call Distribution (ACD) agent station to another.

An object of this invention is to extend the teaching of Baker so as to coordinate a delivery of a recorded voice message or series of voice messages to a call-receiving agent in concert with the delivery of particular data terminal information to the agent's display screen. The data terminal information is correlated to information inputted by, or corresponding to, the caller, in conjunction with the voice message-(s) or by the type of voice message(s) recorded.

SUMMARY OF THE INVENTION

The objects of the invention are realized by method and apparatus for associating a recorded voice message with display screen information and for simultaneously delivering both to an agent's telephone and associated data terminal.

In accordance with a method of the invention there are disclosed the following steps. A first step is the correlation of a telephone call to a specific service requested by a calling party or by a called party. This correlation is based on call associated information (CAI), such as Automatic Number Identification (ANI), Dialed Number Identification Service (DNIS) information, and/or Voice Processing System mailbox related information. Voice Processing System mailbox related information is herein assumed to be an aspect of CAI, and relates to a logically related group of messages stored by the Voice Processing System. Other information may be input by the called or calling party, for example DTMF information inputted through a telephone keypad or voice commands spoken by the caller. The received CAI and/or DTMF information is descriptive of one or more service requests. A second step prompts the party to record one or more voice messages associated with the service request(s). A third step records the party's voice message(s). A fourth step generates a unique transaction and synchronization identifier for tracking of the service request. A fifth step formulates, from the CAI and/or the DTMF information, a service request type and reference information for identifying a display screen used by an agent to process the service request. A sixth step delivers to an agent telephone the recorded voice message or messages, while also delivering the identified display screen to a display terminal associated with the agent telephone.

The step of determining an identification of a display screen for processing the service request further includes a step of accessing a database of display screens and/or a data base of information relating to the party, the database(s) being accessed in accordance with the reference information conveyed by the service request.

The method also employs a synchronization request, generated by a voice processing unit that stores the voice message, that is transmitted to a host data processing system so as to coordinate the simultaneous transfer of the recorded voice message and the display screen information to a particular one of the agents selected by the Voice Processing System. Further in accordance with the invention, the Voice Processing System selects a basic route to a group of agents, and a CBX then selects a route to a specific agent associated with the Voice Processing System selected route. An ability for the host data processing system to redirect the information to another agent or agent group is also provided.

Further in accordance with the invention, there is disclosed a method and apparatus for processing a telephone call. A method includes the steps of, responsive to an established telephone call with a party, (a) receiving information over a phone trunk that is descriptive of a service request; (b) prompting the party to record a voice message or series of voice messages associated with the service request; (c) recording the voice message; (c) determining, from the received information, an identification of a call processing resource, such as an agent, for processing the service request; (d) delivering the recorded voice message to the call processing resource; and (e) providing the determined display screen to a display terminal associated with the call processing resource. The step of receiving receives ANI, DNIS, and/or DTMF information, and the step of determining includes the steps of translating the information into a service request, and transmitting the service request to a Host data processing system. The Host data processing system may cause a redirection of the recorded voice message and display screen to a call processing resource other than an originally selected resource.

BRIEF DESCRIPTION OF THE DRAWING

The above set forth and other features of the invention are made more apparent in the ensuing Detailed Description of the Invention when read in conjunction with the attached Drawing, wherein:

Fig. 1a is a block diagram illustrating major functional blocks of a telephone system embodying the invention;

Fig. 1b is a block diagram showing in greater detail the CBX and VPS blocks of Fig. 1a;

Figs. 2-5 are flow charts illustrating the operation of the invention; and

Fig. 6 depicts the format of messages, which include a service request and a synchronization request, that are exchanged between a Voice Processing System and a Host.

DETAILED DESCRIPTION OF A PREFERRED EMBODIMENT OF THE INVENTION

Fig. 1a illustrates in block diagram form a telephone system, in particular a Call Management Control System (CMCS) 10, that embodies the teachings of the invention. System 10, in a presently preferred embodiment of the invention, includes a Host processor (Host) 12 coupled via a Logical Unit (LU) 6.2 interface to a digital switch, such as a Computerized Branch Exchange (CBX) 14. The Host 12 includes a MEMORY 12A that is comprised of both temporary RAM and a mass storage device such as a magnetic disk or magnetic tape unit. The MEMORY 12A stores program information, customer account information, and other information, including a data base 12B of terminal display screen information.

Particularly suitable apparatus that embodies these functional blocks is described in detail in the before mentioned U.S. Patent No. 4,805,209, issued February 14, 1989. The disclosure of U.S. Patent No. 4,805,209 is incorporated by reference herein in its entirety. Although the ensuing description is made in reference to a hardware and software system of a type described in U.S. Patent 4,805,209, it should be realized that the teaching of the invention is not limited for use with only such a system and that the teaching of the invention is applicable to a large number of possible hardware and/or software embodiments.

The Host 12 may be an IBM System/370 processor, a description of which is found in a document entitled "S/370 Reference Summary, GX20-1850", published by the International Business Machines Corporation (IBM is a registered trademark of the International Business Machines Corporation and System/370 is a trademark of the International Business Machines Corporation). While the Host 12 in a presently preferred embodiment of the invention is embodied in a S/370 processor it should be realized that the invention can be practiced with other types of mainframes or with minicomputers or microprocessors.

The CBX 14 may be a CBX known in the art as a ROLM 9751 CBX, a description of which is found in a document entitled "IBM 9750 Business Communications System", published by the ROLM Corporation (1987). It should be realized however that the invention can be practiced with other varieties of CBX or Private Branch Exchange (PBX) equipment.

A communication link (CL) between the Host 12 and the CBX 14 is a standard System Data Link Control (SDLC) communication link that corresponds, in this embodiment of the invention, to the LU 6.2 standard. A detailed description of a LU 6.2 communication link and a description of how to implement a program interface to conform with this standard is provided in the following documents published by the International Business Machines Corporation: "Systems Network Architecture: Sessions Between Logical Units, GC20-1868" and "SNA Transaction Programmer's Reference Manual For LU 6.2, GC30-3084". In other embodiments of the invention the link between the Host 12 and the CBX 14 may be other than a communication link that conforms to the LU 6.2 standard.

As described in U.S. Patent No. 4,805,209 there are coupled to Host 12 a plurality of user interface terminals, shown herein as terminals 16 (TERM 1 through TERM n). Coupled to CBX 14 are a plurality of phones, shown herein as phones 18 (PHONE 1 through PHONE n). Also coupled to CBX 14 are phone trunks 15 containing voice-carrying signal lines. It should be realized that in some embodiments, the terminal 16 and the phone 18 may be integrated into a single workstation unit.

A caller into the CMCS 10 will be connected to a Voice Processing System (VPS) 20, which additionally has a Voice Response capability. This connection may be accomplished by a number of known techniques. By example, the connection may be the result of a DNIS/ANI routing that connects the caller directly to the VPS 20 (the VPS 20 is the primary target of the caller). The connection may also be result of a Direct Inward Dialing (DID) capability, or the result of direct dialing. The connection may also result from Dedicated Trunk (DED), or as a result of intervention and assistance by a CBX attendant or automated routing equipment. The connection may also be the result of the VPS 20 acting as an overflow target for callers encountering situations in which a call processing resource, for example an agent or specialist provided to answer the caller's information request, is congested beyond a time considered reasonable for the caller to wait in a queue on the CBX 14.

That is, a caller into the CMCS 10 may encounter situations in which a call processing resource, for example an agent or specialist provided to answer the caller's information or service request, is congested beyond a time considered reasonable for the caller to wait in a queue on the CBX 14. In accordance with an aspect of the invention, the CBX 14 initially detects such congestion and routes the caller to the store and forward VPS 20. One suitable embodiment of the VPS 20 is known as a PhoneMail System manufactured by ROLM Systems of Santa Clara, CA, Model No. 7652, the operation of which is described in a publication G320-6699-00, available from ROLM Systems.

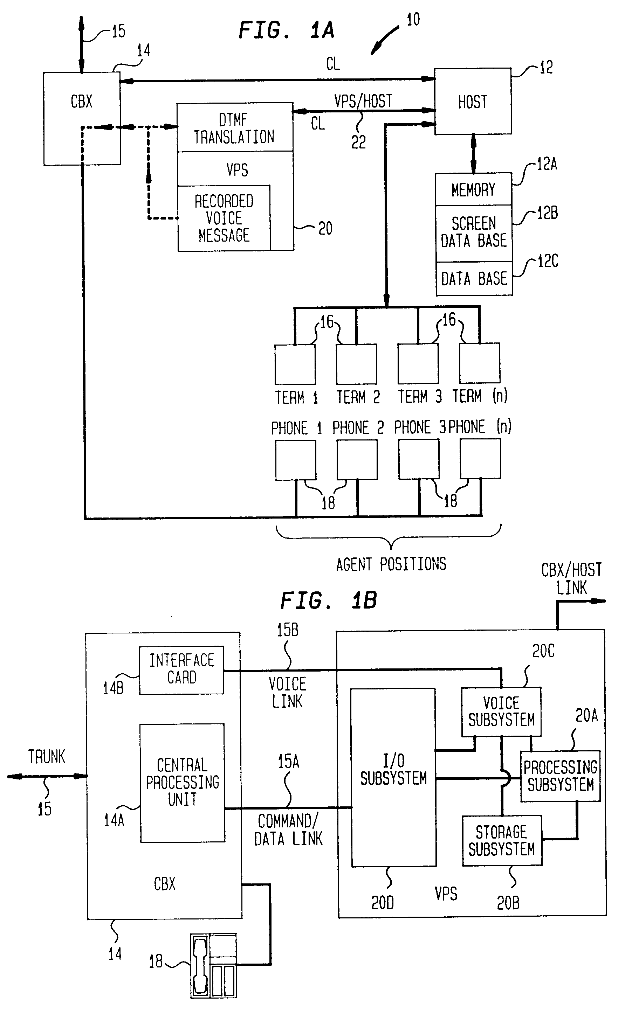

Fig. 1b illustrates in greater detail the CBX 14 and the VPS 20. The CBX 14 includes a central processing unit 14a and a voice interface card 14b. The CBX 14 is coupled to the VPS 20 via a logical command/data link 15a and by a logical voice link 15b. For an ISDN embodiment, these logical links may be integrated into a common physical link. The CBX 14 is also coupled to the plurality of agent phones 18, only one of which is shown in Fig. 1b. The VPS 20 includes a number of subsystems. Specifically, these subsystems include a processing subsystem 20a, a storage subsystem 20b, a voice subsystem 20c, and an I/O subsystem 20d. The processing subsystem 20a operates, in accordance with the invention, to generate service requests, to control the voice subsystem, to record caller messages, and to deliver recorded caller messages to a specific one of the agent phones, via voice link 15b and CBX 14, in a manner described in detail below.

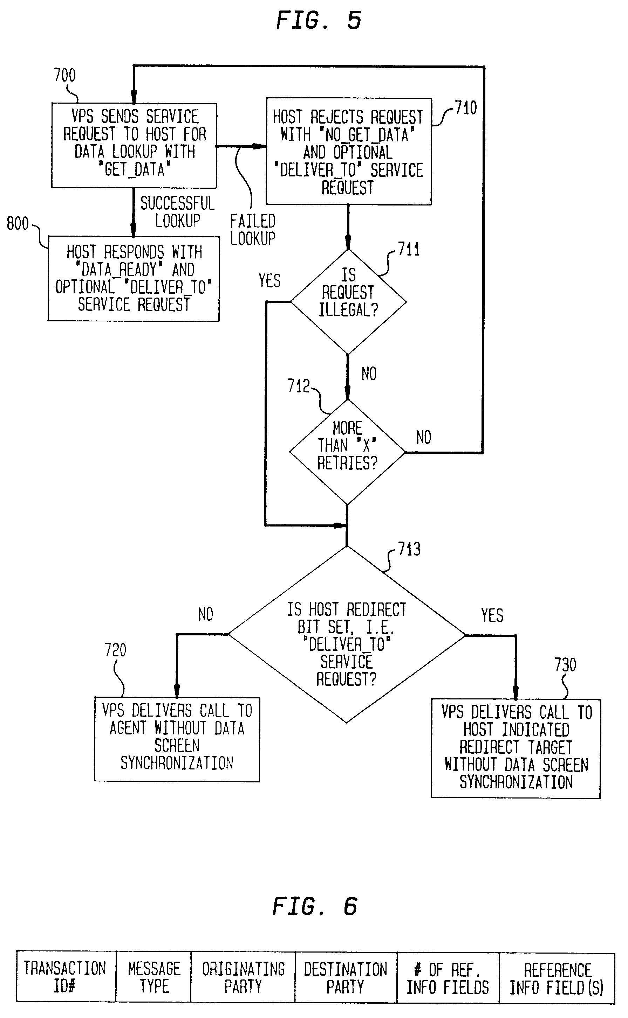

In accordance with an aspect of the invention messages are passed between the Host 12 and the VPS 20, the messages describing voice message event states, service requests, synchronization requests, and the availability of the VPS 20 and Host 12. These various messages are passed over a VPS/Host Control Link 22. A presently preferred format for these messages is shown in Fig. 6, and a detailed description of same is shown in Tables 1-4, as described below.

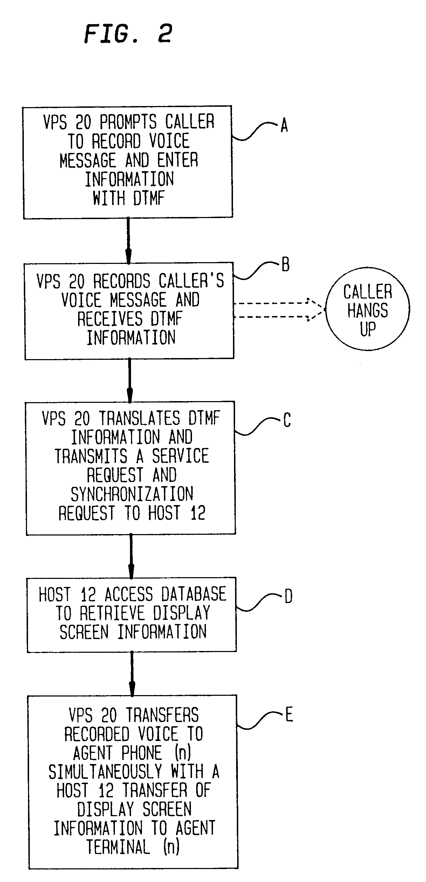

As seen in the flowchart of Fig. 2, an incoming caller is connected through the CBX 14 to the VPS 20. The CBX 14 passes, if available, the ANI and DNIS call associated information (CAI) to the VPS 20. The VPS 20 prompts the caller to perform one or more of the following actions, or a combination of one or more of the following actions: record a voice message, record a series of voice messages regarding a specific service request, or enter requested information with conventional DTMF tones with the caller's phone keypad (Block A). The ANI, DNIS, and/or DTMF information is expressive of the caller's specific service request and is employed to associate the caller's service request, and the caller's recorded voice message, with database information resident on the Host 12. The voice message and database information are thus logically linked together.

Further by example, the service request may be identified by a specific UPS 20 mailbox into which the call is directed. As employed herein, a mailbox is considered to store logically related messages. By example, one dialed number may cause the VPS 20 to direct incoming calls to a consumer inquiry mailbox, while another dialed number may cause the UPS 20 to direct all incoming calls to a consumer ordering mailbox. For this case, the VPS 20 is considered to generate the CAI, whereas for ANI or DNIS the VPS 20 may be considered to receive the CAI.

As an example of the use of DTMF, the caller is requested to enter identification information, such as an account number or social security number, by means of DTMF tones. The VPS 20, after receiving the DTMF tones and decoding same, prompts the caller to enter a code identifying a required service. For example, the caller may be calling to order a product, to change the caller's shipping address, or to check on the status of a previously placed order. By depressing the appropriate key or keys on the caller's phone the DTMF information is generated and is routed through the CBX 14 and interpreted and translated by the VPS 20. The caller is then requested to record a voice message. The voice message preferably relates to the requested service. By example, if the caller is calling to change the delivery address for an order, the recorded voice message identifies the new address.

The caller's voice message is recorded by the VPS 20 (Block B) and stored in either an analog or a digital format, depending upon the capabilities of the VPS 20. After providing the required service request and voice information the caller may hang up.

Further by example, the ANI information, which identifies the phone billing number that the caller is calling from, may be decoded by area code to identify a geographical location associated with the caller. The DNIS information may be expressive a particular type of service required. For example, one predetermined phone number that is dialed by the caller may be associated with ordering information for a specific type of product or with a specific type of service, while a second predetermined phone number is associated with another type of product or service.

At the completion of the call, the VPS 20 has a stored voice record and an associated stored data record, both of which are descriptive of a service request.

At some later time an agent becomes available to receive the recorded call, and the recorded voice information is relayed to a particular one of the agent phones 18. In accordance with the invention the Host 12 also provides a screen of information to the associated agent terminal 16. As such, the responding agent is simultaneously provided the recorded voice message and the associated screen of data that is required to process the recorded voice message. In accordance with the examples previously given, the agent may be provided with a screen of information for entering the caller's recorded order. Or, the agent may be provided with a screen of information having the caller's name, address, etc. so that the agent can modify the address portion in accordance with the recorded voice message.

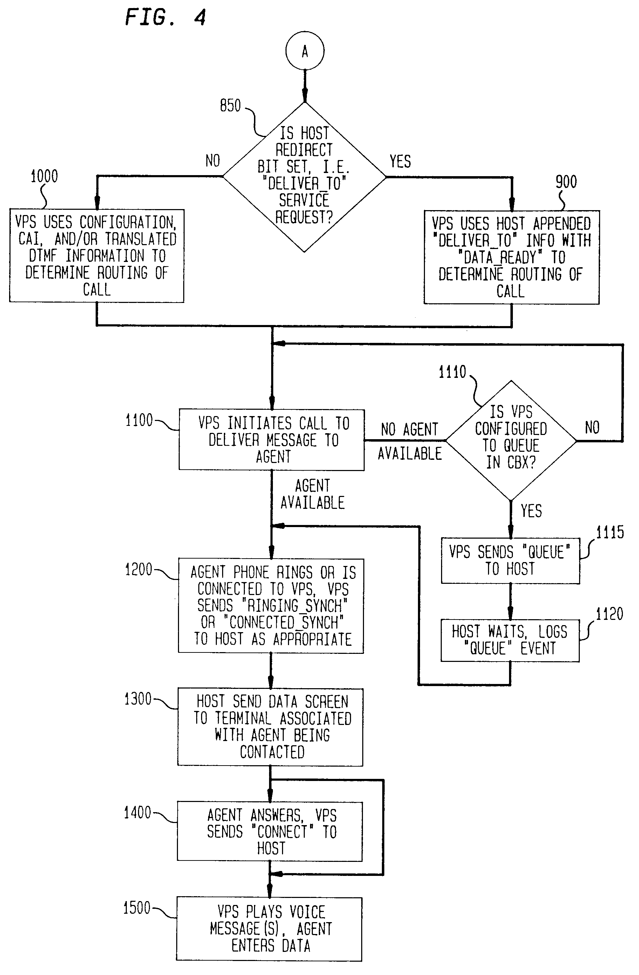

In accordance with an aspect of the invention, the VPS 20 may select a basic route to a group of agents, and the CBX 14 then selects a route to a specific agent associated with the VPS 20 selected route. Alternately, the VPS 20 selects a specific agent and the CBX 14 routes the recorded voice message accordingly. The Host 12 is notified of the identity of the selected agent via the CBX/Host communication link (CL) or the Host 12 is notified of the identity of the selected agent via the VPS/Host CL 22. The latter is accomplished at Block 1200 of Fig. 4, as will be described in detail below, in accordance with the information in Tables 1 and 3. During the execution of Block 1200 of Fig. 4 byte #1 of Table 3 specifies what type of data is included in bytes 2-25. For this example, byte 1 specifies, during an initial data request executed in Block 800, the ACD Pilot Number (#). The ACD Pilot # is an identification of a "Route #", that is, a logical phone number in the CBX 14 that corresponds to a group of ACD agents. When the CBX 14 is ringing or connected to a CBX-selected agent, based on the ACD Pilot #, the byte #1 of Table 3, executed in Block 1200, specifies that bytes 2-25 indicate an ACD Agent Phone #. In addition, it is within the scope of the invention in Table 3 to instead route to a non-ACD Pilot # or to a non-ACD Agent Phone #.

The identity of the selected agent, as determined by the ACD Agent Phone #, as indicated in bytes 2-25 of Table 3, is employed by the Host 12 in routing the appropriate data screen and/or caller information to the terminal 16 associated with the selected agent.

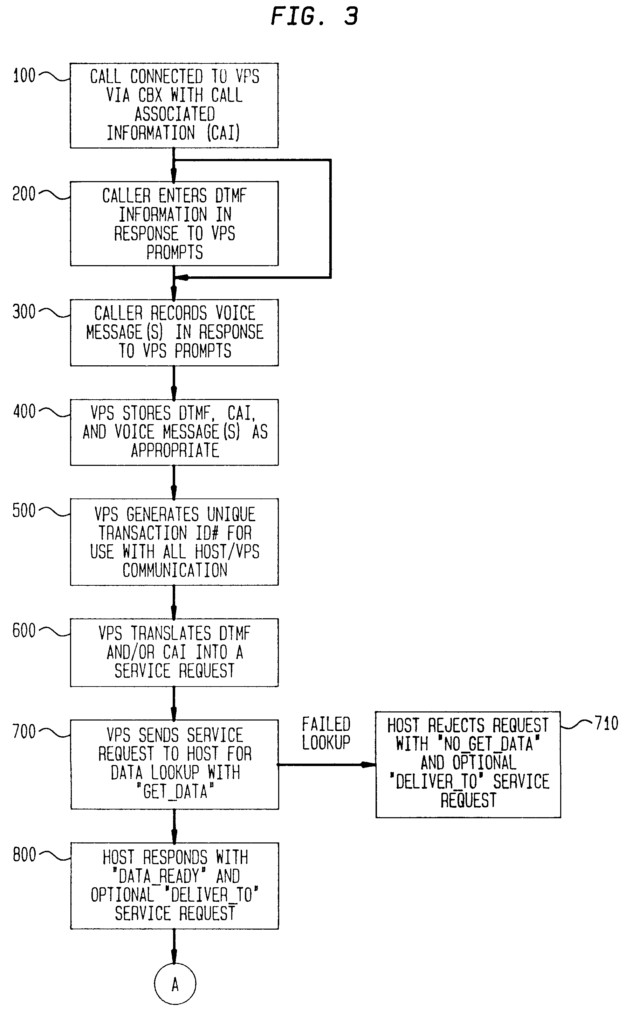

In addition to these two routing methods the invention also provides an ability for the host data processing system to redirect the information to another agent or agent group. This capability is preferably employed at data request time (Block 800 of Fig. 3).

As can be appreciated, the teaching of the invention provides for greater agent efficiency. That is, the teaching of the invention enables an agent to process more calls per unit time than would be possible if the agent were required to first listen to the recorded voice message to determine the nature of the caller's request, and to then access the Host 12 database to obtain the necessary screen of information.

It should also be realized that the recorded voice information and the terminal screen are logically associated in the system 10, so that a transfer of this information to one or more other agents may be accomplished in accordance with the teaching in the above referenced U.S. Patent No. 4,805,209.

More specifically, CBX 14 and VPS 20 event states are passed between the CBX 14, VPS 20, and the Host 12 in realtime using protocols employed in U.S. Patent 4,805,209. The CAI and/or DTMF information that results from the call is stored by the VPS 20, translated, and communicated to the Host 12 (Block C) as a service request (Fig. 3), and as a synchronization request (Fig. 4), both of which are described in detail below.

The Host 12 employs the translated ANI, DNIS, and/or DTMF service request information to search a Host 12 database to locate stored information that is associated with the caller's service request (Block D). In response to a synchronization request from the VPS 20 the Host 12 transfers the database information to an identified terminal screen 16, as the recorded voice message is delivered by the VPS 20, via the CBX 14, to the associated phone 18 (Block E).

The VPS 20 synchronization and service requests are communicated to the Host 12, in one mode of operation, on a store and forward basis. This associates the recorded voice message with the database information and provides a subsequent, realtime synchronization of the database information and voice message for the simultaneous delivery of both to an agent.

Reference is now made to the flow chart of Fig. 3 for showing the operation of service requests. At Block 100 an incoming call is connected to the VPS 20, via the CBX 14, with the call associated information (CAI), such as ANI and/or DNIS. From Block 100 the caller may enter DTMF information in response to a prompt from the VPS 20. Alternately, the caller may directly record a voice message or messages in response to a VPS 20 prompt (Block 300). At Block 400 the VPS may store the DTMF information, if provided, or store the ANI and/or DNIS CAI, and the voice message or messages, as appropriate. At Block 500 the VPS generates a unique transaction identifier (ID#) for use with all subsequent host/VPS communications related to this call. At Block 600 the VPS 20 translates the DTMF and/or CAI into a "GET__DATA" service request. At Block 700 the VPS sends the "GET__DATA" service request to the Host 12, with appropriate information that identifies the required data. In response to the receipt of this message, the Host 12 attempts to look up the requested data in a customer data base 12C and/or in screen data base 12B. If the lookup fails, the Host 12 rejects the request (Block 710) and responds with a "NO__GET__DATA" response. If the data lookup is successful, the Host 12 responds with a "DATA__READY" response, and if a redirect mode of operation is in effect, with an optional "DELIVER__TO" response for identifying an agent phone number or agent group.

The format of the VPS/Host messages is depicted in Fig. 6. Each of the fields, such as Transaction ID#, is comprised of one or more bytes. By example, the Transaction ID# field consists of one byte and thus specifies up to 256 unique transaction IDs. Of course, more than one byte can be utilized for encoding more than 256 unique transaction IDs. The Message Type field also consists of one byte and specifies one of a number of possible message types, as seen in Table 1. These message types are differentiated into service request message types, event message types, and response message types. Here also, more than one byte can be employed for representing more than 128 different message types.

## TABLE 1

| Value | Transaction ID # | |
|---|---|---|
| Binary | 0 - 255 | |
| Value | Message Type | |
| Byte 1: Bits 0-6 | "Start_ Application" | Request |
| | "End_Application" | Request |
| | "Get_Data" | Request |
| | "Ringing_Synch" | Request |
| | "Connect_Synch" | Request |
| | "Call_Cancel" | Request |
| | "Trans_ID_Cancel" | Request |
| | "Queue" | Event |
| | "Connect" | Event |
| | "Ack_Start_Application" | Response |
| | "No_Start_Application" | Response |
| | "Ack_End_Application" | Response |
| | "No_End_Application | Response |
| | "Data_Ready" | Response |
| | "No_Get_Data" | Response |
| | "Ack_Ringing_Synch" | Response |
| | "No_Ringing_Synch" | Response |
| | "Ack_Connect_Synch" | Response |
| | "No_Connect_Synch" | Response |
| | "Ack_Call_Cancel" | Response |
| | "Ack_Trans_ID_Cancel" | Response |
| | "Illegal_Request" | Response |
| | "Ack_Deliver_To" | Response |
| | "No_Deliver_To" | Response |
| | "Ack_Queue" | Response |
| | "Ack_Connect" | Response |
| | "Illegal_Trans_ID" | Response |
| | "Dup_Trans_ID" | Response |
| | "Illegal_Request" | Response |
| Byte 1; Bit 7    On | "Deliver_To" | Optional Host Redirect Request |
| Off | "No_Redirect" | No Optional Redirect Request |

For each service request message type transmitted from the VPS 20 to the Host 12, there is a corresponding acknowledge (ACK) or not-acknowledge (NAK) response message type that is returned by the Host 12. For example, for the "START_APPLICATION" service request, the Host 12 may respond with an "ACK_START_APPLICATION" or with a "NO_START_APPLICATION" (NAK) response message, for indicating whether a specified user application program is available in the Host 12.

The format of the Originating Party field of Fig. 6 is shown in Table 2, and the format of the Destination Party field is shown in Table 3. The "# of Reference Information" field is a one byte field that specifies a number of multibyte fields that comprise the Reference Information. The format of the Reference Information field is shown in Table 4.

7

TABLE 2

| value | Originating Party |
|---|---|
| Byte 1: | VPS Mailbox<br>Live Caller |
| Bytes 2-25: ASCII | Party # |

TABLE 3

| Value | Destinatation Party |
|---|---|
| Byte 1: | ACD Pilot #<br>ACD Agent Phone #<br>Telephone #<br>Remote Telephone # |
| Bytes 2-25: ASCII | Party # |

TABLE 4

| Value | Reference Information |
|---|---|
| Byte 1: | Account #<br>Zip Code<br>Social Security Number<br>Telephone #<br>Configurable Proprietary Reference |
| Byte 2: Length<br>Bytes 3- n ASCII | 0 -255<br>Reference Information |

By example, the reference information in Table 4 may be provided, for a "GET_DATA" service request, by the VPS 20 in accordance with entered DTMF information. That is, if the caller was prompted to enter his social security number, the first byte of a Reference Information field would contain a code indicating that the following bytes represented a social security number. Additional Reference Information fields may specify that the identified caller desires to change an address to which a refund is to be mailed. This information may have been derived from DNIS information, by the caller calling a predetermined phone number set aside for change of addresses, or from entered DTMF information, or from other internal information in the VPS 20. Responsive to the service request(s) the Host 12 accesses the identified customer data base 12C, and possibly also a change of address data screen stored in screen data base 12B, so as to subsequently provide this information to an agent terminal.

Referring to Fig. 4, the method continues at the decision Block 850 where a determination is made if a Host redirect bit is set (Table 1, bit 7). If the Host redirect bit is set, Block 1000 is executed wherein the VPS 20 uses the Host 12 appended "DELIVER_TO" information with the "DATA_READY" response message information to determine the routing of the call. If the Host redirect bit is determined not to be set at Block 850, Block 900 is executed where the VPS 20 uses predetermined configuration information, CAI, and/or translated DTMF information to determine the routing of the call.

The Host redirect mechanism enables a dynamic override of a predetermined routing for a specific CAI and/or DTMF input. By example, the ANI information may be employed to route the call to an agent group that handles a predetermined geographical area. However, due to overloading or some other factor, a rerouting of such calls to another agent group may be temporarily in effect. The state of the redirect bit reflects such a condition. It should be noted that, in general, the Host 12 is considered to be slaved to the VPS 20 and, as such, the VPS 20 may ignore the redirect information from the Host 12 and redirect the call to yet another agent group.

8

After the execution of either Block 900 or 1000 Block 1100 is executed wherein the VPS 20 initiates a call to deliver the message to a selected agent phone 18. If no agent is presently available, a check is made at block 1110 to determine if the VPS 20 is configured to queue in the CBX 14. If no, control returns to Block 1100 after a fixed amount of time. If the VPS 20 is configured to queue in the CBX 14 the VPS sends a "QUEUE" event to the Host 12 (Block 1115). In response to the receipt of the "QUEUE" event message the Host 12 logs the queue event and responds with "ACK_QUEUE" (Block 1120). This indicates to the Host 12 that the accessed customer and/or screen information will not be immediately required. The method then enters Block 1200 where an available agent phone rings or is connected to the VPS 20. The VPS 20 then sends a "RINGING_SYNCH" service request, or a "CONNECTED_SYNCH" service request to the Host 12 (if configured to connect immediately without ringing the phone 18).

It should be noted that these various messages and responses that flow between the VPS 20 and the Host 12 are transmitted in accordance with the format shown in Fig. 6, and that each includes the unique transaction identifier that was associated with the previously received incoming call (Fig. 3, Block 500) and that is used in processing the service request.

At Block 1300 the Host 12 sends the previously obtained data screen to the terminal 16 that is associated with the phone 18 of the selected agent. Next, and in response to the agent answering the call, the VPS 20 sends a "CONNECT" event message to the Host 12 (Block 1400). In response to the recorded voice message or messages the agent disposes of the voice message by entering the required data into the appropriate display screen that was provided at Block 1300.

Fig. 5 shows in greater detail the operation of the system at Block 710 (Fig. 3) for a failed "GET_DATA" service request. Blocks 700, 710, and 800 are duplicated from Fig. 3 and operate as previously described. In response to the Host 12 rejecting the "GET_DATA" service request with a "NO_GET_DATA" response message, a determination is made if the request is illegal (Block 711). This determination is made by examining the error code in the reference information field. An illegal request may occur if, by example, the caller had requested that a particular order be changed when, in fact, no record of the order exists in a Host 12 data base. In this case, the Host 12 would be unable to locate the specified order and an error would be signalled with the "NO_GET_DATA" response message. If the request is determined to be a legal request a determination is made if more than some predetermined number of retries have been attempted (Block 712). If no, the method continues at Block 700 (Fig. 3) and the VPS 20 once more sends the service request to the Host 12. If the request is determined to be illegal, a determination is made at Block 713 if the Host redirect field is set (Table 1). If no, the VPS 20 delivers the recorded voice message to a selected agent without data screen synchronization. If yes, the VPS 20 delivers the recorded voice message to a host-indicated redirect target, also without data screen synchronization.

It should be realized that the invention provides valuable and novel extensions to a system of the type taught in U.S. Patent 4,805,209. Furthermore, the teaching of the invention may be employed to advantage by a number of different call processing systems. Also, certain modifications to these teachings may be made. For example, more or less information than that described above may be transmitted between the VPS 20 and the Host 12 and/or the information may be provided in a different format. It is also within the scope of the invention to provide additional and/or other reference information and message types than those specifically shown in Tables 1 and 4. Furthermore, as employed herein, the simultaneous delivery of recorded voice and data screen information is not intended to require that these two types of information arrive at the same exact instant in time.

It is also within the scope of the invention to have the system 10 initiate an outgoing telephone call, to prompt an answering party to enter a voice message and DTMF information, and to thereafter provide, as described above, a specified data screen and the associated recorded voice message to an available agent.

Thus, while the invention has been particularly shown and described with respect to a preferred embodiment thereof, it will be understood by those skilled in the art that changes in form and details may be made therein without departing from the scope and spirit of the invention.

## Claims

1. A method of processing a telephone call, the method comprising the steps of:
   answering a telephone call;
   receiving Call Associated Information (CAI);
   prompting the calling party to provide one or more voice messages;
   recording the one or more voice messages;
   determining, from the CAI, an identification of a display screen for processing the call; and

delivering to an agent telephone the one or more recorded voice messages while also delivering the determined display screen to a display terminal means associated with the agent telephone.

2. A method as set forth in Claim 1 wherein the step of prompting the calling party to record one or more voice messages includes a step of prompting the party to input DTMF information, and wherein the step of determining includes a step of employing the DTMF information to retrieve stored information relating to the calling party.

3. A method as set forth in Claim 1 wherein the steps of prompting and recording are accomplished by a voice processing system.

4. A method as set forth in Claim 1 wherein the step of determining include the steps of:
    translating the CAI into a service request; and
    transmitting the service request to a Host data processing system.

5. A method as set forth in Claim 4 wherein the step of determining further includes a step of accessing a database maintained by the Host data processing system, the database being accessed in accordance with information conveyed by the service request.

6. A method as set forth in Claim 1 wherein the step of delivering to an agent telephone the one or more recorded voice messages is accomplished by a voice processing system, and wherein the step of delivering to a display terminal means is accomplished by a Host data processing system.

7. A method as set forth in Claim 2 and further including the steps of:
    translating the DTMF information into a service request; and
    transmitting the service request to a Host data processing system.

8. A method of processing a telephone call, the method comprising the steps of:
    answering a telephone call;
    prompting the calling party to provide DTMF information;
    prompting the calling party to provide one or more voice messages;
    recording the one or more voice messages;
    determining, from the DTMF information, an identification of an action desired by the calling party; and
    delivering to an agent telephone the one or more recorded voice messages while also delivering stored information to a display terminal means associated with the agent telephone, the delivered stored information being accessed in accordance with the DTMF information.

9. A method as set forth in Claim 8 wherein the step of determining includes the steps of:
    employing the DTMF information to select a display screen; and
    delivering the selected display screen to the display terminal means in conjunction with the delivery of the one or more recorded voice messages.

10. A method as set forth in Claim 8 wherein the step of answering a telephone call includes a step of receiving Call Associated Information (CAI), and wherein the method further includes the steps of:
    employing the CAI to select a display screen; and
    delivering the selected display screen to the display terminal means in conjunction with the delivery of the one or more recorded voice messages.

11. A method as set forth in Claim 8 wherein the steps of prompting and recording are accomplished by a voice processing system.

12. A method as set forth in Claim 8 wherein the step of determining include the steps of:
    translating the DTMF information into a service request; and
    transmitting the service request to a Host data processing system.

13. A method as set forth in Claim 12 wherein the step of determining further includes a step of accessing a database maintained by the Host data processing system, the database being accessed in accordance with information conveyed by the service request.

14. A method as set forth in Claim 8 wherein the step of delivering to an agent telephone the one or more recorded voice messages is accomplished by a voice processing system, and wherein the step of delivering to a display terminal means is accomplished by a Host data processing system.

15. A method as set forth in Claim 10 wherein the step of selecting include the steps of:
    translating the CAI into a service request; and
    transmitting the service request to a Host data processing system.

16. A system for processing a telephone call, comprising:
    means, responsive to an established telephone call, for prompting a party to input DTMF information descriptive of a service request and for prompting the party to record a voice message or series of voice messages associated with the service request;
    means for recording the voice message;
    means for determining from the DTMF information, an identification of a display screen for processing the service request;
    means for delivering to an agent telephone the recorded voice message; and
    means, responsive to operating of the delivering means, for simultaneously providing the determined display screen to a display terminal means associated with the agent telephone.

17. A system as set forth in Claim 16 wherein the prompting means and the recording means are each elements of a voice processing system, and wherein the providing means includes a Host data processing system that is coupled to the voice processing system and to the display screen.

18. A system as set forth in Claim 17 wherein the voice processing system further includes:
    means for translating the DTMF information into a service request;
    means for transmitting the service request to the Host data processing system.

19. A system as set forth in Claim 16 wherein said prompting means further includes means for receiving or generating Call Associated Information (CAI) from a phone trunk coupling means, the CAI including ANI and/or DNIS information, and wherein said prompting means further includes means for translating the CAI into a service request; and means for transmitting the service request to a Host data processing system.

20. A system as set forth in Claim 18 and including means for selecting and directing the recorded voice message to a target agent telephone, and wherein said voice processing means is responsive to information received from the Host data processing system for redirecting the recorded voice message to a target agent telephone that is specified by the Host data processing system.

21. A system as set forth in Claim 17 wherein the Host data processing system includes a database, the Host data processing system further including:
    means, responsive to a service request generated by the voice processing system, for accessing the database to retrieve display screen information specified by the service request; and
    means, responsive to a synchronization request generated by the voice processing system, for transferring the retrieved display screen information to a specified display terminal means.

22. A system as set forth in Claim 16 and further comprising a computer controlled telephone switch that is communicatively coupled to the prompting means.

23. A method for processing a telephone call, comprising the steps of:
    responsive to an established telephone call with a party, receiving information over a phone trunk that is descriptive of a service request;
    prompting the party to record a voice message or series of voice messages associated with the service request;
    recording the voice message;
    determining, from the received information, an identification of a call processing resource for processing the service request;

delivering the recorded voice message to the call processing resource; and

providing the determined display screen to a display terminal means associated with the call processing resource.

24. A method as set forth in Claim 23 wherein the steps of prompting and recording are executed by voice processing means, and wherein the step of providing is executed by a Host data processing system that is coupled to the voice processing means and to the display terminal means.

25. A method as set forth in Claim 23 wherein the step of receiving receives DTMF information, and wherein the step of determining includes the steps of:

translating the DTMF information into a service request;

transmitting the service request to a Host data processing system.

26. A method as set forth in Claim 23 wherein the step of receiving receives Call Associated Information, and wherein the step of determining includes the steps of:

translating the Call Associated Information into a service request;

transmitting the service request to a Host data processing system.

27. A method as set forth in Claim 23 wherein the step of delivering includes the initial step of selecting a call processing resource for directing the recorded voice message to the selected call processing resource.

28. A method as set forth in Claim 27 and, responsive to information received from a Host data processing system, redirecting the recorded voice message to a call processing resource that is specified by the Host data processing system.

29. A method as set forth in Claim 24 wherein the Host data processing system includes a database, and wherein the method further includes the steps of:

responsive to a service request generated by the voice processing means, accessing the database to retrieve display screen information specified by the service request; and

responsive to a synchronisation request generated by the voice processing means, transferring the retrieved display screen information to a display terminal means.

30. A method as set forth in Claim 23 and including an initial step of establishing the telephone call by answering a telephone call made by the party.

31. A method as set forth in Claim 23 and including an initial step of establishing the telephone call by making a telephone call to the party.

## FIG. 1A

CBX — 14, 15, CL, HOST — 12, DTMF TRANSLATION, VPS/HOST — 22, CL, VPS, RECORDED VOICE MESSAGE — 20, MEMORY — 12A, SCREEN DATA BASE — 12B, DATA BASE — 12C, TERM 1, TERM 2, TERM 3, TERM (n) — 16, PHONE 1, PHONE 2, PHONE 3, PHONE (n) — 18, AGENT POSITIONS, 10

## FIG. 1B

TRUNK — 15, INTERFACE CARD — 14B, 15B, VOICE LINK, CENTRAL PROCESSING UNIT — 14A, 15A, COMMAND/DATA LINK, CBX — 14, 18, I/O SUBSYSTEM — 20D, VOICE SUBSYSTEM — 20C, PROCESSING SUBSYSTEM — 20A, STORAGE SUBSYSTEM — 20B, VPS, CBX/HOST LINK

13

# FIG. 2

VPS 20 PROMPTS CALLER
TO RECORD VOICE
MESSAGE AND ENTER
INFORMATION
WITH DTMF  — A

↓

VPS 20 RECORDS CALLER'S
VOICE MESSAGE AND
RECEIVES DTMF
INFORMATION  — B  ----→ CALLER HANGS UP

↓

VPS 20 TRANSLATES DTMF
INFORMATION AND
TRANSMITS A SERVICE
REQUEST AND
SYNCHRONIZATION
REQUEST TO HOST 12  — C

↓

HOST 12 ACCESS DATABASE
TO RETRIEVE DISPLAY
SCREEN INFORMATION  — D

↓

VPS 20 TRANSFERS
RECORDED VOICE TO
AGENT PHONE (n)
SIMULTANEOUSLY WITH A
HOST 12 TRANSFER OF
DISPLAY SCREEN
INFORMATION TO AGENT
TERMINAL (n)  — E

# FIG. 3

100 — CALL CONNECTED TO VPS VIA CBX WITH CALL ASSOCIATED INFORMATION (CAI)

200 — CALLER ENTERS DTMF INFORMATION IN RESPONSE TO VPS PROMPTS

300 — CALLER RECORDS VOICE MESSAGE(S) IN RESPONSE TO VPS PROMPTS

400 — VPS STORES DTMF, CAI, AND VOICE MESSAGE(S) AS APPROPRIATE

500 — VPS GENERATES UNIQUE TRANSACTION ID# FOR USE WITH ALL HOST/VPS COMMUNICATION

600 — VPS TRANSLATES DTMF AND/OR CAI INTO A SERVICE REQUEST

700 — VPS SENDS SERVICE REQUEST TO HOST FOR DATA LOOKUP WITH "GET_DATA"

FAILED LOOKUP

710 — HOST REJECTS REQUEST WITH "NO_GET_DATA" AND OPTIONAL "DELIVER_TO" SERVICE REQUEST

800 — HOST RESPONDS WITH "DATA_READY" AND OPTIONAL "DELIVER_TO" SERVICE REQUEST

( A )

## FIG. 4

(A)

850 — IS HOST REDIRECT BIT SET, I.E. "DELIVER_TO" SERVICE REQUEST?

NO →

1000 — VPS USES CONFIGURATION, CAI, AND/OR TRANSLATED DTMF INFORMATION TO DETERMINE ROUTING OF CALL

YES →

900 — VPS USES HOST APPENDED "DELIVER_TO" INFO WITH "DATA_READY" TO DETERMINE ROUTING OF CALL

1100 — VPS INITIATES CALL TO DELIVER MESSAGE TO AGENT

NO AGENT AVAILABLE →

1110 — IS VPS CONFIGURED TO QUEUE IN CBX?

NO →

YES

AGENT AVAILABLE

1115 — VPS SENDS "QUEUE" TO HOST

1200 — AGENT PHONE RINGS OR IS CONNECTED TO VPS, VPS SENDS "RINGING_SYNCH" OR "CONNECTED_SYNCH" TO HOST AS APPROPRIATE

1120 — HOST WAITS, LOGS "QUEUE" EVENT

1300 — HOST SEND DATA SCREEN TO TERMINAL ASSOCIATED WITH AGENT BEING CONTACTED

1400 — AGENT ANSWERS, VPS SENDS "CONNECT" TO HOST

1500 — VPS PLAYS VOICE MESSAGE(S), AGENT ENTERS DATA

## FIG. 5

700 — VPS SENDS SERVICE REQUEST TO HOST FOR DATA LOOKUP WITH "GET_DATA"

SUCCESSFUL LOOKUP

FAILED LOOKUP

800 — HOST RESPONDS WITH "DATA_READY" AND OPTIONAL "DELIVER_TO" SERVICE REQUEST

710 — HOST REJECTS REQUEST WITH "NO_GET_DATA" AND OPTIONAL "DELIVER_TO" SERVICE REQUEST

711 — IS REQUEST ILLEGAL?

YES

NO

712 — MORE THAN "X" RETRIES?

NO

713 — IS HOST REDIRECT BIT SET, I.E. "DELIVER_TO" SERVICE REQUEST?

NO

YES

720 — VPS DELIVERS CALL TO AGENT WITHOUT DATA SCREEN SYNCHRONIZATION

730 — VPS DELIVERS CALL TO HOST INDICATED REDIRECT TARGET WITHOUT DATA SCREEN SYNCHRONIZATION

## FIG. 6

| TRANSACTION ID# | MESSAGE TYPE | ORIGINATING PARTY | DESTINATION PARTY | # OF REF. INFO FIELDS | REFERENCE INFO FIELD(S) |
| --- | --- | --- | --- | --- | --- |